# FASCICULE DE BREVET EUROPEEN

(11) **EP 0 662 461 B1**
(45) Date de publication et mention de la délivrance du brevet: **07.07.1999**
(21) Numéro de dépôt: 95400032.9
(22) Date de dépôt: 06.01.1995
(51) Int. Cl.: C04B 35/48, C04B 35/484, B02C 17/20

(54) **Billes en matière céramique fondue**
Kugeln aus geschmolzenen keramischen Werkstoff
Balls from molten ceramic material

(30) Priorité: 11.01.1994 FR 9400209
(43) Date de publication de la demande: 12.07.1995
(73) Titulaire: SOCIETE EUROPEENNE DES PRODUITS REFRACTAIRES, F-92400 Courbevoie (FR)
(72) Inventeur: Bert, Christophe, F-84510 Caumont sur Durance (FR); Urffer, Daniel, F-84310 Morieres-les-Avignon (FR)
(74) Mandataire: Colas, Jean-Pierre

(56) Documents cités:
- WO-A-91/18843
- FR-A- 2 320 276
- CHEMICAL ABSTRACTS, vol. 117, no. 22, 30 Novembre 1992, Columbus, Ohio, US; abstract no. 218573, Y.TIAN 'MELT-CAST ZIRCONIA-CONTAINING CORUNDUM LINING BRICKS AND BALLS FOR BALL MILLS, AND THEIR MFR.' page 413 ;colonne L ; & CN-A-1 062 132 (FAMING ZHUANLI SHENGQING GONGKAI SHUOMINGSHU) 24 Juin 1992
- DATABASE WPI Week 9109, Derwent Publications Ltd., London, GB; AN 91-60820 & JP-A-3 008 451 (TOYAMA CERAMIC KK) 16 Janvier 1991

## Description

L'invention concerne des billes en matière céramique fondue utiles en particulier dans les appareils et procédés de microbroyage et de microdispersion en milieu humide.

Les appareils et procédés de microbroyage et microdispersion en milieu humide sont à présent bien connus et développés dans les industries telles que :
- l'industrie minérale : broyage fin de particules prébroyées à sec par des procédés traditionnels (cas du carbonate de calcium, de l'oxyde de titane, du gypse, du kaolin, du minerai de fer, etc...)
- les industries des peintures et encres, colorants, laques magnétiques, composés agrochimiques pour la dispersion et l'homogénéisation des divers constituants liquides et solides.

Ces appareils et procédés utilisent le plus souvent des agents dispersants ou broyants de forme sphérique et de faible diamètre (billes de 0,3 à 4 mm par exemple).

Brièvement ces billes doivent posséder les propriétés suivantes:
- inertie chimique et colorante vis-à-vis des produits traités
- résistance mécanique aux chocs
- résistance à l'usure
- faible abrasivité pour le matériel (organes agitateurs, cuves etc)
- densité élevée pour une bonne efficacité de broyage
- faible porosité ouverte pour un nettoyage aisé.

D'un point de vue pratique, on trouve sur le marché un nombre limité d'agents dispersants ou broyants:
- sable à grains arrondis
- billes de verre
- billes métalliques
- billes céramiques frittées
- billes céramiques fondues.

Le sable à grains arrondis (sable d'OTTAWA par exemple) est un produit naturel et bon marché. Utilisé à l'origine, il est cependant de moins en moins employé car il n'est pas adapté aux broyeurs modernes (pressurisés et à fort débit). En effet le sable est peu résistant, de faible densité, variable en qualité et il est abrasif pour le matériel.

Les billes de verre ont progressivement remplacé le sable de par leurs avantages évidents sur celui-ci meilleure résistance, plus faible abrasivité, disponibilité dans une gamme plus large de diamètres.

Les billes de verre sont actuellement largement utilisées mais il est apparu une demande pour des agents de broyage et dispersion plus performants : billes plus résistantes aux chocs et à l'usure et plus efficaces (plus denses).

Les billes en acier connues depuis longtemps répondent en partie à ce problème mais leur utilisation reste marginale pour les raisons suivantes :
- inertie insuffisante vis-à-vis des produits traités (pollution des charges minérales, grisaillement des peintures etc...)
- densité trop élevée nécessitant des broyeurs spéciaux (forte énergie consommée, échauffement, sollicitation mécanique du matériel).

On connaît également des billes en matière céramique. Ces billes ont une meilleure résistance que les billes de verre, une densité plus élevée, et une excellente inertie chimique. On peut distinguer :
- les billes céramiques frittées, obtenues par un façonnage à froid de poudre céramique et une consolidation par cuisson à haute température ; et
- les billes céramiques "fondues", c'est-à-dire des billes obtenues par fusion des composants céramiques à très haute température, formation de gouttes sphériques et solidification.

La grande majorité des billes fondues ont une composition du type zircone-silice (ZrO₂ - SiO₂) où la zircone est cristallisée sous forme monoclinique et la silice (et les additifs éventuels) forme une phase vitreuse.

Ces billes céramiques fondues présentent une structure mixte - phase cristallisée et phase vitreuse étroitement imbriquées - qui tout en autorisant des propriétés optimales pour le broyage (résistance mécanique, densité élevée, inertie chimique), leur confère une abrasivité faible vis-à-vis du matériel de broyage.

Cette phase vitreuse occupe un volume toujours nettement supérieur en pourcentage au pourcentage pondéral de silice introduite.

Une large gamme de billes céramiques fondues pour le broyage et la dispersion est décrite dans FR-A 2 320 276 ou US-A-4 106 947. Ce brevet couvre un éventail de compositions ZrO₂ - SiO₂ et décrit l'influence des oxydes additionnels Al₂O₃, Na₂O, MgO et CaO.

Bien que les diverses billes céramiques fondues de l'art antérieur soient de bonne qualité, l'industrie a toujours besoin de produits de qualité encore meilleure.

L'invention vise à satisfaire ce besoin en fournissant des billes en matière céramiques fondue de qualité supérieure par rapport aux billes de l'art antérieur et qui sont particulièrement utiles en tant qu'agents de dispersion ou de broyage.

Plus précisément l'invention concerne des billes en matière céramique formées par fusion d'une charge de matières premières, conversion de la matière fondue obtenue en billes de forme générale sphérique et solidification de celles-ci, qui comprennent ZrO₂ et SiO₂ comme constituants essentiels, caractérisés en ce qu'elles présentent la composition chimique suivante, en % en poids sur la base des oxydes :
40 à 95% de ZrO₂ et HfO₂ ;
au moins l'un de Y₂O₃ et CeO₂ avec les conditions que Y₂O₃, si présent, représente 0,1 à 10% et CeO₂, si présent, représente 1 à 15%, le total de Y₂O₃ et CeO₂ représentant 0,1 à 25% ;
une quantité de SiO₂ représentant 10 à 45% de la composition lorsque CeO₂ est absent de la composition et 0,5 à 45% lorsque CeO₂ est présent dans la composition.

Lorsqu'on parle de ZrO₂ ci-dessous, il y aura lieu de comprendre (ZrO₂ + HfO₂). En effet, un peu de HfO₂, chimiquement indissociable du ZrO₂ et de propriétés semblables, est toujours présent à côté du ZrO₂, comme cela est bien connu.

De préférence, Y₂O₃, si présent, représente au moins 0,7% en poids.

Lorsqu'on utilise du Y₂O₃, il en faut au moins 0,1% en poids pour obtenir une amélioration notable. Une proportion de 10% en poids de Y₂O₃ suffit à amener toute la zircone présente à l'état cubique. Au-delà de 10% en poids, l'oxyde d'yttrium en excès n'accroît pas davantage la résistance mécanique et il peut y avoir apparition d'autres phases cristallines non souhaitables.

Y₂O₃ est l'oxyde additionnel préféré, si l'on recherche surtout des billes à haute résistance mécanique.

L'addition de CeO₂ est à choisir, toutefois, lorsqu'on recherche, en plus d'une haute résistance mécanique, des billes de forte densité. Pour assurer une augmentation sensible de la densité, il faut au moins 1% en poids de CeO₂. Une proportion, de 14% en poids de CeO₂ suffit à à amener toute la zircone présente à l'état cubique. Au-delà de 15% en poids de CeO₂, l'oxyde de cérium en excès n'améliore pas davantage la résistance mécanique et il peut y avoir apparition d'autres phases cristallines non souhaitables.

Pour obtenir des billes de compacité correcte, il faut au moins 10% en poids de SiO₂ en l'absence de CeO₂. Si du CeO₂ est présent, on peut descendre jusqu'à un minimum de 0,5% de SiO₂, en fonction de la proportion de CeO₂, bien entendu. Il ne faut pas dépasser 45% en poids de SiO₂ pour ne pas dégrader exagérément les propriétés réfractaires des billes.

Pour ce qui est de ZrO₂, il en faut au moins 40% en poids pour obtenir des billes à bonnes propriétés mécaniques et pas plus de 95% en poids pour des raisons de possibilité de fabrication.

De préférence, pour des raisons économiques,le pourcentage de ZrO₂ dans la composition est supérieur à 65% et le rapport en poids ZrO₂/SiO₂ est supérieur à 2.

La composition peut facultativement comprendre, en outre, un ou plusieurs des oxydes suivants :
- oxydes de terres rares associés dans les minerais naturels à Y₂O₃ et/ou à CeO₂ (dans le cas d'utilisation de matières premières impures plus économiques) : de 0 à 10 %.
- Al₂O₃ dans une proportion telle que le rapport en poids Al₂O₃/SiO₂ vaille de 0 à 1,5
- Na₂O dans une proportion telle que le rapport en poids Na₂O/SiO₂ vaille de 0 à 0,04
- MgO dans une proportion telle que le rapport en poids MgO/SiO₂ vaille de 0 à 1
- CaO dans une proportion telle que le rapport en poids CaO/SiO₂ vaille de 0 à 1,45.

Le total des oxydes facultatifs Al₂O₃, Na₂O, MgO et CaO, ne doit pas dépasser 20 % en poids du total de la composition. Ce seuil maximum est nécessaire pour que les oxydes additionnels spécifiques à l'invention (Y₂O₃ et CeO₂) jouent un rôle significatif sur la qualité des billes fondues.

La présente invention est relative à des compositions fondues du type ZrO₂ - SiO₂ qui contiennent au moins un oxyde additionnel qui apporte, de façon surprenante, des avantages particuliers. Cet oxyde est choisi parmi l'oxyde d'yttrium (Y₂O₃) et l'oxyde de cérium (CeO₂), éventuellement associé à d'autres oxydes de terres rares présents dans les matières premières.

Cet ou ces oxydes additionnels apportent des avantages à la fois à la fabrication des billes fondues et à leur application.

L'ajout des oxydes Y₂O₃ ou CeO₂ modifie l'état du matériau fondu notamment dans le sens d'une plus faible viscosité, il devient dès lors beaucoup plus facile de couler et disperser des compositions de type ZrO₂ - SiO₂ même très riches en zircone. Cet ajout conduit également à un meilleur dégagement des gaz qui peuvent être dissous dans le matériau fondu pendant la période de fusion et d'élaboration. On trouvera donc moins de bulles de gaz et donc moins de billes poreuses dans le produit fini.

Comme beaucoup d'oxydes fondus les compositions ZrO₂ - SiO₂ subissent un retrait à la solidification (contraction liée à la densité du solide plus élevée que celle du liquide correspondant). Dans le cas d'un intervalle de solidification très court (zircone pure par exemple), la solidification des gouttes de liquide dispersé conduit à une cavité au centre des billes (grosse porosité dite retassure) très préjudiciable à la résistance des billes. Par ajout de Y₂O₃ ou CeO₂, et particulièrement avec CeO₂, il est possible de couler des compositions très riches en ZrO₂ (> 85% en poids) sans apparition de retassure dans les billes. Dans le système ZrO₂ - SiO₂, les compositions riches en ZrO₂ sont plus denses, ce qui est favorable pour l'efficacité de broyage des billes produites.

Dans les billes solidifiées du système ZrO₂ - SiO₂ - Y₂O₃ ou ZrO₂ - SiO₂ - CeO₂ l'oxyde d'yttrium ou de cérium se partage entre la zircone cristallisée et la phase vitreuse. La zircone se trouve principalement sous forme quadratique, et parfois cubique, selon le taux de Y₂O₃ ou CeO₂ introduit. Il s'agit là d'une différence importante par rapport aux brevets précédents concernant les compositions ZrO₂ - SiO₂ fondues où la zircone reste en très grande partie monoclinique (un peu de zircone cubique apparaît avec MgO).

La forme quadratique est la plus dense des trois variétés allotropiques de la zircone (densité 6,1 contre 5,9 pour la zircone cubique et 5,8 pour la zircone monoclinique), de plus elle exerce un effet de renforcement mécanique sur la matrice dans laquelle elle se trouve.

La partie des oxydes Y₂O₃ et CeO₂ qui n'est pas fixée dans la zircone rentre dans la constitution de la phase silicatée vitreuse avec également un effet favorable sur la densité et la résistance mécanique.

En résumé l'addition d'oxyde d'yttrium ou d'oxyde de cérium permet dans des billes fondues ZrO₂ - SiO₂ :
- de diminuer les défauts de porosité (retassures ou bulles)
- d'obtenir des billes plus denses
- d'obtenir des billes plus résistantes aux chocs et à l'usure.

Il s'agit donc des progrès importants par rapport aux billes céramiques fondues connues jusqu'à présent, qui rendent les billes de l'invention très utiles dans les applications de broyage et dispersion humides.

Il est intéressant de noter que la plupart des compositions utilisées dans l'invention peuvent être obtenues à partir de sable de zircon naturel (Zr SiO₄) titrant environ 66 % ZrO₂ et 33 % SiO₂ (+ impuretés). L'utilisation de sable de zircon comme matière première pour la fabrication des billes de l'invention est très intéressante du point de vue économique et est donc préférée.

L'ajustement des compositions peut se faire par addition des oxydes purs ou de mélanges d'oxydes (ZrO₂, SiO₂, Y₂O₃, CeO₂ etc...). En particulier, l'apport d'oxyde de Ce peut être fait par des concentrés d'oxydes mixtes de terres rares (éléments de n° atomique 57 à 71).

Il est connu qu'une fusion de zircon dans des conditions réductrices permet l'élimination de tout ou partie de la silice (SiO₂). Cette façon d'opérer est beaucoup plus économique qu'une addition de ZrO₂ dont le prix est élevé.

On peut également noter que les oxydes de métaux alcalins ou alcalino-terreux (Na₂O, MgO, CaO) peuvent être introduits en utilisant de façon économique des carbonates ou hydrates comme matières premières.

A l'exception de la silice qui peut être réduite, des oxydes volatils (oxydes de métaux alcalins voire de métaux alcalino-terreux), des radicaux non réfractaires (CO₂ pour les carbonates, H₂O pour les hydrates), l'analyse chimique des billes fondues est sensiblement identique à celle de la composition de départ.

La fabrication des billes de l'invention s'opère de façon classique. On peut fondre la charge de départ formée des oxydes indiqués ou de précurseurs de ceux-ci dans un four électrique ou autre dispositif de fusion adapté. Un filet de matière fondue est dispersé en petites particules qui par suite de la tension superficielle prennent la forme sphérique. Cette dispersion peut être opérée par soufflage (air, vapeur d'eau...) ou par tout autre procédé d'atomisation d'une matière fondue, connu de l'homme de l'art. Des billes d'un diamètre de 0,1 à 4 mm peuvent être ainsi produites.

Les billes de l'invention sont particulièrement bien adaptées comme agents de broyage et de dispersion en milieu humide. On peut noter cependant que leurs propriétés (résistance, densité, facilité d'obtention...) peuvent les rendre aptes à d'autres applications des billes céramiques: agents de broyage à sec, de grenaillage, de soutènement, d'échange thermique etc....

Les exemples non limitatifs suivants sont donnés dans le but d'illustrer l'invention.

Les méthodes suivantes ont été utilisées pour déterminer certaines caractéristiques des billes.

### Examen sur section polie :

Quelques grammes de billes de même diamètre sont positionnées dans un même plan et enrobés dans une résine thermodurcissable. La petite pièce obtenue est meulée de façon à obtenir des sections des billes dans un plan médian. Cette préparation est suffisante pour observer la porosité, les cavités de retassure et les fentes éventuellement présentes. On définit un indice de compacité par le pourcentage de billes ne présentant pas de porosités ou cavités visibles à la loupe binoculaire (par comptage sur 200 billes de 2 mm par exemple).

Pour observer la structure cristalline, il est souhaitable d'opérer un polissage des sections meulées, par exemple à la pâte diamantée.

### Analyse des phases aux rayons X :

L'analyse radiocristallographique par diffraction des rayons X est une méthode bien connue pour mesurer de façon qualitative ou quantitative approximative les phases cristallisées en présence.

Dans le cas des billes cette analyse est réalisée sur section polie telle que définie précédemment.

### Résistance à l'écrasement :

Pour chaque composition de billes, 20 à 100 billes de même diamètre et de bonne sphéricité sont sélectionnées et sont soumises une à une à un test d'écrasement entre les deux pistons d'une presse. Pour que la comparaison soit possible, le test doit être opéré sur des billes de même diamètre, 2 mm habituellement. La résistance à l'écrasement est la moyenne des valeurs obtenues.

### Densité apparente :

La densité apparente des billes est mesurée à l'eau froide au pycnomètre selon une méthode hydrostatique basée sur la poussée d'archimède.

### Test de comportement en broyeur de laboratoire :

C'est un essai plus complexe que les précédents mais qui représente une excellente simulation du comportement réel en service dans l'application broyage.

Un broyeur pressurisé horizontal de capacité 1,2 l est rempli par 1 l (volume apparent) des billes à tester (soit 83,3 % de taux de remplissage). On retient une tranche granulométrique usuelle de comparaison (par exemple 0,8 à 1,25 mm).

Les organes agitateurs sont constitués de disques métalliques, excentrés par rapport à l'axe de rotation tournant à 2750 tr/mn, soit une vitesse périphérique des disques de 10 m/s.

La suspension à broyer est une suspension de poudre de zircone concentrée à 60 % dans l'eau (6 kg de poudre pour 4 kg d'eau). Cette suspension est véhiculée à travers le broyeur par une pompe péristaltique au débit de 6 l/h.

En fin d'essai on peut apprécier :
- l'efficacité de broyage par la réduction du diamètre de la poudre broyée
- l'usure du matériel par la perte de poids des disques agitateurs
- l'usure des billes par la perte de poids de la charge d'agents broyants.

### Exemples 1 à 6: Billes de composition économique

Dans le but d'obtenir des billes fondues améliorées mais à un faible coût, on utilise dans ces exemples:
- une composition à base de zircon
- une addition d'oxyde d'yttrium inférieure à 2 %.

On introduit dans un four électrique à arc type Héroult pour la fusion des oxydes une composition pulvérulente constituée de sable de zircon. On effectue plusieurs cycles fusion/coulée en rajoutant progressivement dans la composition de l'oxyde d'yttrium de qualité courante (99,9 % Y₂O₃) dans une proportion croissante de 0 à 2 %. Le produit fondu est dispersé en billes par soufflage d'air comprimé et isolé coulée par coulée.

Cette technique permet de disposer de plusieurs lots de billes de composition différentes que l'on peut caractériser selon les méthodes décrites précédemment.

Les résultats obtenus sont résumés dans le tableau suivant :

| Exemple | Analyses | chimiques | du produit | coulé | % de zircone sous forme quadratique | Compacité des billes (2 mm) | Résistance à l'écrasement (billes de 2 mm) |
|---|---|---|---|---|---|---|---|
| | ZrO₂ (+HfO₂) | SiO₂ | Y₂O₃ | Autres | | | |
| Référence | 68% | 31% | <0,1% | 1% | <5% | 90% | 80 kgf |
| 1 | 67,5% | 30,8% | 0,7% | 1% | 7% | 94% | 90 kgf |
| 2 | 67,3% | 30,7% | 1% | 1% | 10% | 95% | 95 kgf |
| 3 | 67,2% | 30,6% | 1,2% | 1% | 12% | 96% | 105 kgf |
| 4 | 67,1% | 30,5% | 1,4% | 1% | 13% | 97% | 110 kgf |
| 5 | 66,8% | 30,4% | 1,8% | 1% | 15% | 98% | 115 kgf |
| 6 | 66,7% | 30,3% | 2,0% | 1% | 18% | 98% | 120 kgf |

La supériorité des billes selon l'invention (1 à 6) apparaît nettement dans ce tableau par rapport à la composition de référence (en dehors du cadre de l'invention).

La densité apparente des billes croît régulièrement de 3,8 à 3,9 en passant de l'exemple de référence à l'exemple 6. Tous ces produits contiennent environ 50% en volume de phase vitreuse.

Les résultats des exemples de référence et 1 à 6 sont comparables car ils sont obtenus dans des conditions de fusion/dispersion fixées.

Comme dans les exemples suivants, il s'agit de conditions connues de l'homme de l'art permettant d'obtenir industriellement des billes fondues correctes.

Pour la bonne compréhension des résultats, il faut également noter que la compacité et la résistance à l'écrasement des billes sont deux caractéristiques partiellement indépendantes.

Il est possible par exemple d'améliorer la compacité des billes solidifiées en éliminant des billes poreuses par une technique de sélection densimétrique mais cela améliore peu la résistance moyenne à l'écrasement.

### Exemples 7 et 8: Billes de résistance élevée pour le broyage

Dans ces exemples on cherche à obtenir des billes de résistance la plus élevée possible pour l'application broyage.

Cette considération prime ici sur les considérations de coût (cf exemples 1 à 6 et 10/11) et sur l'obtention d'une densité maximale (cf exemple 9).

Pour l'obtention d'une résistance maximale l'application broyage on diminue le taux de silice par rapport aux exemples 1 à 6 (diminution de la phase vitreuse mécaniquement faible).

Il est apparu cependant qu'un minimum de SiO₂ de 10 % est nécessaire pour l'obtention de compacités correctes dans le cas de billes selon l'invention sans CeO₂.

Dans les exemples 7 et 8 on maintient un taux minimum de 15 % SiO₂ dans un double but :
- obtenir une quantité de phase vitreuse suffisante pour bien lier les cristaux de zircone
- éviter une densité trop élevée qui favorise l'auto-usure des billes dans les broyeurs.

On introduit dans un four électrique à arc type Héroult pour la fusion des oxydes une composition pulvérulente constituée de :
- 61 % de sable de zircon, 32,5 % de zircone technique (99 % ZrO₂) et 6,5 % d'oxyde d'yttrium pour l'exemple 7
- 46 % de sable de zircon, 46,5 % de zircone technique et 7,5 % d'oxyde d'yttrium pour l'exemple 8.
Le produit fondu est dispersé en billes et caractérisé selon les méthodes décrites précédemment.

| Exemple | Analyses chimiques du produit coulé | | | | % de zircone sous forme quadratique ou cubique | Compacité des billes (2 mm) | Résistance à l'écrasement (billes de 2 mm) |
|---|---|---|---|---|---|---|---|
| | ZrO₂ (+HfO₂) | SiO₂ | Y₂O₃ | Autres | | | |
| 7 | 72,5% | 20% | 6,5% | 1 % | 100 % | 98 % | 180 kgf |
| 8 | 76,5% | 15% | 7,5% | 1 % | 100 % | 98 % | 200 kgf |

Pour ces deux exemples, particulièrement intéressants pour le broyage, nous avons utilisé le test de comportement en broyeur de laboratoire sur des billes 0,8 à 1,25 mm.

Les billes de ces deux exemples ont été comparées à deux produits de référence hors du cadre de l'invention :
- billes fondues de l'exemple de référence défini précédemment
- billes frittées de bonne qualité en zircone partiellement stabilisée à la magnésie (96 % ZrO₂ - 3 % MgO - 1 % divers oxydes).

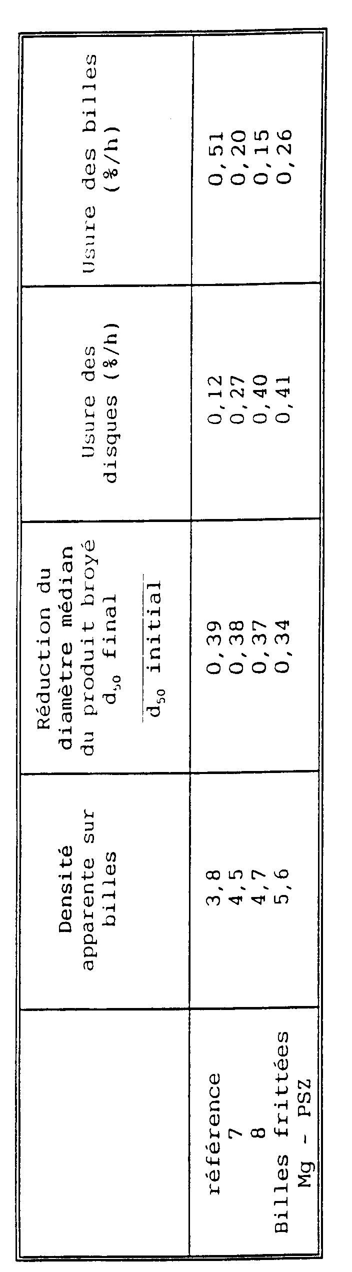

Il apparaît clairement que les billes fondues selon l'invention permettent d'améliorer l'efficacité de broyage et de diminuer la consommation d'agents de broyage, par rapport aux billes fondues de référence.

Ces améliorations s'accompagnent cependant d'une augmentation de l'abrasivité pour le matériel qui peut atteindre celle des billes de zircone frittée. En prenant en compte ce point de vue, on peut considérer que l'exemple 7 est un meilleur compromis que l'exemple 8.

### Exemple 9: Billes de densité très élevée

Il peut être intéressant pour des applications particulières de disposer de billes céramiques de densité très élevée (broyage de suspensions très visqueuses, de produits très tenaces; recherche de grenailles non métalliques denses; recherche d'une capacité calorifique élevée pour des échangeurs thermiques etc).

Dans cet exemple on cherche donc à obtenir une densité maximale même si c'est aux dépens de la résistance des billes.

On introduit dans un four électrique à arc type Héroult pour la fusion des oxydes une composition pulvérulente constituée de 86 % de zircone technique (99 % ZrO₂ - 0,5 % SiO₂ - 0,5 % d'autres oxydes) et 14 % d'oxyde de cérium industriel (99,9 % CeO₂).

Le produit fondu est dispersé en billes et caractérisé selon les méthodes définies :

| Exemple | Analyses chimiques du produit coulé | | | | % de zircone sous forme quadratique ou cubique | Compacité des billes (2 mm) | Résistance à l'écrasement (billes de 2 mm) |
|---|---|---|---|---|---|---|---|
| | ZrO₂ (+HfO₂) | CeO₂ | SiO₂ | Autres | | | |
| 9 | 85% | 14% | 0,5% | 0,5% | 100% | 90% | 80 kgf |

L'intérêt de cette composition vient de la densité apparente sur billes qui atteint ici le niveau record de 6,1. L'oxyde de cérium permet donc de diminuer de façon extrême la quantité de silice dans les billes fondues (et donc la quantité de phase vitreuse de faible densité), tout en conservant une compacité et une résistance acceptables.

### Exemples 10 et 11 : Billes de résistance élevée pour le broyage contenant plusieurs oxydes additionnels

Dans ces exemples, on montre qu'il est possible d'obtenir des billes de résistance élevée pour le broyage en introduisant dans la même composition plusieurs oxydes additionnels (Y₂O₃ et CeO₂ d'une part, Y₂O₃ et MgO d'autre part).

Cette méthode peut s'avérer économique en fonction du coût, lié à la conjoncture, des matières premières contenant Y₂O₃ ou CeO₂.

On introduit dans un four électrique à arc pour la fusion des oxydes une composition pulvérulente constituée de:
- 54 % de sable de zircon, 33 % de zircone technique (99 % ZrO₂), 3 % d'oxyde d'yttrium et 10 % d'oxyde de cérium pour l'exemple 10
- 56 % de sable de zircon, 38 % de zircone technique, 3 % d'oxyde d'yttrium et 3 % d'oxyde de magnésium pour l'exemple 11.

Le produit fondu est dispersé en billes et caractérisé selon les méthodes décrites précédemment.

| Exemple | Analyse chimique du produit coulé | | | | | | % de zircone sous forme quadratique ou cubique | Compacité des billes (2 mm) | Résistance à l'écrasement (2 mm) |
|---|---|---|---|---|---|---|---|---|---|
| | ZrO₂ (+HfO₂) | SiO₂ | Y₂O₃ | CeO₂ | MgO | Autres | | | |
| 10 | 68,5% | 17,5% | 3% | 10% | . | 1% | 100% principalement quadratique | 98% | 180 kgf |
| 11 | 74,5% | 18,5% | 3% | . | 3% | 1% | 100% principalement cubique | 98% | 160 kgf |

Les billes de l'exemple 10 sont voisines des billes de résistance élevée de l'exemple 7. L'oxyde de cérium remplace partiellement l'oxyde d'yttrium, il faut toutefois une masse de cérium plus élevée.

Dans l'exemple 11 les billes sont légèrement moins résistantes que celle des exemples 7, 8 ou 10. Il s'agit toutefois de billes de bonne qualité par rapport aux compositions fondues connues et d'un coût moins élevé que les billes améliorées uniquement par Y₂O₃ ou CeO₂.

## Revendications

1. Billes en matière céramique formées par fusion d'une charge de matières premières, conversion de la matière fondue obtenue en billes de forme générale sphérique et solidification de celles-ci, qui comprennent ZrO₂ et SiO₂ comme constituants essentiels, caractérisés en ce qu'elles présentent la composition chimique suivant en % en poids sur la base des oxydes :
40 à 95% de ZrO₂ et HfO₂ ;
au moins l'un des oxydes additionnels Y₂O₃ et CeO₂ avec les conditions que Y₂O₃, si présent, représente 0,1 à 10% et CeO₂, si présent, représente 1 à 15%, le total de Y₂O₃ et CeO₂ représentant 0,1 à 25% ;
une quantité de SiO₂ représentant 10 à 45% de la composition lorsque CeO₂ est absent de la composition et 0,5 à 45% lorsque CeO₂ est présent dans la composition.

2. Billes selon la revendication 1, caractérisées en ce que le pourcentage de ZrO₂ est supérieur à 65% et le rapport ZrO₂/SiO₂ supérieur à 2.

3. Billes selon l'une quelconque des revendications 1 et 2, caractérisées en ce que les oxydes Y₂O₃ ou CeO₂ sont introduits en association avec d'autres terres rares, la teneur de ces autres oxydes ne dépassant 10% en poids de la composition.

4. Billes selon l'une quelconque des revendications 1 à 3, caractérisée en ce qu'elles contiennent en outre au moins d'un des oxydes additionnels suivants :
- Al₂O₃ dans une proportion telle que le rapport en poids Al₂O₃/SiO₂ vaille de 0 à 1,5
- Na₂O dans une proportion telle que le rapport en poids Na₂O/SiO₂ vaille de 0 à 0,04
- MgO dans une proportion telle que le rapport en poids MgO/SiO₂ vaille de 0 à 1
- CaO dans une proportion telle que le rapport en poids CaO/SiO₂ vaille de 0 à 1,45,
l'ensemble de ces oxydes ne dépassant pas 20%.

5. Billes selon l'une quelconque des revendications 1 à 4, caractérisées en ce qu'elles présentent des diamètres entre 0,1 et 4 mm.

6. Billes selon l'une quelconque des revendications 1 à 5, caractérisées en ce qu'elles contiennent du Y₂O₃, mais pas du CeO₂.

7. L'utilisation des billes selon l'une quelconque des revendications 1 à 6 en tant qu'agents de broyage ou de dispersion en milieu humide.

## Claims

1. Ceramic beads produced by melting a batch of raw materials, converting the molten material obtained into beads of spherical general shape and solidifying them, which comprise ZrO₂ and SiO₂ as essential ingredients, characterized in that they have the following chemical composition, in % by weight on the basis of the oxides:
40 to 95 % of ZrO₂ and HfO₂;
at least one of the additional oxides Y₂O₃ and CeO₂, with the provisos that Y₂O₃, when present, represents 0.1 to 10 % and CeO₂, when present, represents 1 to 15 %, the total of Y₂O₃ and CeO₂ representing 0.1 to 25 %;
a quantity of SiO₂ representing 10 to 45 % of the composition when CeO₂ is absent from the composition and 0.5 to 45 % when CeO₂ is present in the composition.

2. Beads according to Claim 1, characterized in that the percentage of ZrO₂ is higher than 65 % and the ZrO₂/SiO₂ ratio is higher than 2.

3. Beads according to any of Claims 1 and 2, characterized in that the Y₂O₃ or CeO₂ oxides are introducted in association with other rare-earth oxides, the content of these other oxides not exceeding 10 % by weight of the composition.

4. Beads according to any of Claims 1 to 3, characterized in that they additionally contain at least one of the following additional oxides:
- Al₂O₃ in a proportion such that the weight ratio Al₂O₃/SiO₂ has a value of 0 to 1.5
- Na₂O in a proportion such that the weight ratio Na₂O/SiO₂ has a value of 0 to 0.04
- MgO in a proportion such that the weight ratio MgO/SiO₂ has a value of 0 to 1
- CaO in a proportion such that the weight ratio CaO/SiO₂ has a value of 0 to 1.45, the sum of these oxides not exceeding 20 %.

5. Beads according to any of Claims 1 to 4, characterized in that they have diameters between 0.1 and 4 mm.

6. Beads according to any of Claims 1 to 5, characterized in that they contain Y₂O₃, but no CeO₂.

7. Use of beads such as defined in any of Claims 1 to 6 as grinding media or dispersing media in wet medium.

## Patentansprüche

1. Kugeln aus Keramik, die durch Schmelzen einer Rohstoffcharge, Umwandlung des erhaltenen geschmolzenen Materials zu Kugeln mit im allgemeinen kugelförmiger Gestalt und Verfestigung derselben gebildet werden und ZrO₂ und SiO₂ als wesentliche Bestandteile umfassen, dadurch gekennzeichnet, daß sie die folgende chemische Zusammensetzung aufweisen, in Gew.-%, bezogen auf die Oxide:
40 bis 95% ZrO₂ und HfO₂;
wenigstens eines der zusätzlichen Oxide Y₂O₃ und CeO₂, mit der Maßgabe, daß Y₂O₃, falls vorhanden, 0,1 bis 10% bildet und CeO₂, falls vorhanden, 1 bis 15% bildet, wobei Y₂O₃ und CeO₂ insgesamt 0,1 bis 25% bilden;
eine Menge SiO₂, die 10 bis 45% der Zusammensetzung bildet, wenn kein CeO₂ in der Zusammensetzung vorhanden ist, und 0,5 bis 45%, wenn CeO₂ in der Zusammensetzung vorhanden ist.

2. Kugeln gemäß Anspruch 1, dadurch gekennzeichnet, daß der prozentuale steil von ZrO₂ größer als 65% ist und das Verhältnis ZrO₂/SiO₂ größer als 2 ist.

3. Kugeln gemäß einem der Ansprüche 1 und 2, dadurch gekennzeichnet, daß die Oxide Y₂O₃ oder CeO₂ in Verbindung mit anderen Seltenen Erden eingeführt werden, wobei der Gehalt dieser anderen Oxide 10 Gew.-% der Zusammensetzung nicht überschreitet.

4. Kugeln gemäß einem der Ansprüche 1 bis 3, dadurch gekennzeichnet, daß sie außerdem wenigstens eines der folgenden zusätzlichen Oxide enthalten:
- Al₂O₃ in einem solchen Anteil, daß das Gewichtsverhältnis Al₂O₃/SiO₂ 0 bis 1,5 beträgt;
- Na₂O in einem solchen Anteil, daß das Gewichtsverhältnis Na₂O/SiO₂ 0 bis 0,04 beträgt;
- MgO in einem solchen Anteil, daß das Gewichtsverhältnis MgO/SiO₂ 0 bis 1 beträgt;
- CaO in einem solchen Anteil, daß das Gewichtsverhältnis CaO/SiO₂ 0 bis 1,45 beträgt;
wobei die Gesamtheit dieser Oxide 20% nicht überschreitet.

5. Kugeln gemäß einem der Ansprüche 1 bis 4, dadurch gekennzeichnet, daß sie Durchmesser zwischen 0,1 und 4 mm aufweisen.

6. Kugeln gemäß einem der Ansprüche 1 bis 5, dadurch gekennzeichnet, daß sie Y₂O₃, aber kein CeO₂ enthalten.

7. Verwendung der Kugeln gemäß einem der Ansprüche 1 bis 6 als Mittel zum Mahlen oder Dispergieren in feuchtem Medium.
